# EUROPEAN PATENT APPLICATION

(11) **EP 2 796 810 A1**
(43) Date of publication of application: **29.10.2014**
(21) Application number: 11878299.4
(22) Date of filing: 19.12.2011
(51) Int. Cl.: F25B 5/02, B60H 1/32

(54) **COOLING DEVICE**

(71) Applicant: Toyota Jidosha Kabushiki Kaisha, Toyota-shi, Aichi 471-8571 (JP)
(72) Inventor: KAWAKAMI, Yoshiaki, Toyota-shi Aichi 471-8571 (JP); ARAI, Kunihiko, Toyota-shi Aichi 471-8571 (JP)
(74) Representative: TBK
(86) International application number: PCT/JP2011/079351
(87) International publication number: WO 2013/093991

(57) **Abstract**

A cooling device capable of improving constancy of the ability of a coolant to cool a heat source is provided. A cooling device (1) cooling an HV device (31, 33) includes a compressor (12) compressing a coolant; a heat exchanger (14) performing heat exchange between the coolant and outside air; an expansion valve (16) decompressing the coolant; a heat exchanger (18) performing heat exchange between the coolant and air-conditioning air; a cooling unit (30) connected in parallel with the heat exchanger (18) and cooling the HV device (31, 33) using the coolant; an expansion valve (19) provided on a downstream side of the heat exchanger (18) and regulating pressure of the coolant flowing through the heat exchanger (18); and an expansion valve (39) provided on a downstream side of the cooling unit (30) and regulating the pressure of the coolant flowing through the cooling unit (30). The expansion valve (19) is regulated in opening degree in accordance with a temperature of the coolant between the expansion valve (16) and the expansion valve (19). The expansion valve (39) is regulated in opening degree in accordance with a temperature of the coolant between the expansion valve (16) and the expansion valve (39).

## Description

### TECHNICAL FIELD

The present invention relates to a cooling device, and particularly to a cooling device cooling a heat source utilizing a vapor compression refrigeration cycle.

### BACKGROUND ART

In recent years, as one of countermeasures against environmental problems, attention has been paid to a hybrid vehicle, a fuel cell vehicle, an electric vehicle, and the like running with driving force of a motor. In such vehicles, electric devices such as a motor, a generator, an inverter, a converter, and a battery generate heat by transmission and reception of electric power. Therefore, these electric devices need to be cooled. Accordingly, there is a proposed technique for cooling a heat-generating body utilizing a vapor compression refrigeration cycle used as an air-conditioning apparatus for a vehicle.

For example, Japanese Patent Laying-Open No. 2007-69733 (PTD 1) discloses a system for cooling a heat-generating body utilizing a coolant for an air-conditioning apparatus. In the system, a heat exchanger for performing heat exchange with air-conditioning air and a heat exchanger for performing heat exchange with the heat-generating body are arranged in parallel on a coolant passage extending from an expansion valve to a compressor.

Japanese Patent Laying-Open No. 09-290622 (PTD 2) discloses a technique, by which waste heat is recovered from a heat generating portion mounted in a vehicle and causing a coolant for gas injection to absorb heat, thereby effectively improving the heating performance at a relatively low outside-air temperature while suppressing an increase in power consumption. Japanese Patent Laying-Open No. 11-23081 (PTD 3) discloses a device that is provided with a cooler having a construction in which intermediate-pressure coolant of a refrigeration cycle cools a heat-generating device, and that is provided with electric expansion valves that are disposed upstream and downstream of the cooler, such that the opening degrees of the valves can be controlled on the basis of an external signal, wherein a heat-generating device is cooled using the intermediate-pressure coolant.

Japanese Patent Laying-Open No. 2001-309506 (PTD 4) discloses a cooling system, in which a coolant of a refrigeration cycle device for vehicle air-conditioning is circulated to a cooling member of an inverter circuit portion for performing a drive control of a vehicle running motor, thereby suppressing cooling of air-conditioning air flow by an evaporator of the refrigeration cycle device for vehicle air-conditioning when cooling of the air-conditioning air flow is not required. Japanese Patent Laying-Open No. 2005-82066 (PTD 5) discloses a cooling system, in which when a coolant is accumulated in an evaporator, a compressor is operated to recover the coolant accumulated in the evaporator, and then, an HV device of the vehicle is started to start the operation of a pump.

### CITATION LIST

### PATENT DOCUMENT

PTD 1: Japanese Patent Laying-Open No. 2007-69733
PTD 2: Japanese Patent Laying-Open No. 09-290622
PTD 3: Japanese Patent Laying-Open No. 11-23081
PTD 4: Japanese Patent Laying-Open No. 2001-309506
PTD 5: Japanese Patent Laying-Open No. 2005-82066

### SUMMARY OF INVENTION

### TECHNICAL PROBLEM

In a vapor compression refrigeration cycle used as an air-conditioning apparatus for a vehicle, a coolant is cooled in a condenser by performing heat exchange with outside air supplied as wind caused by vehicle running or supplied by draft from a fan. When the amount of outside air supplied to the condenser is changed in accordance with the running state of the vehicle, the temperature of the coolant having been cooled in the condenser is also changed. In addition, the amount of generated heat from a heat source as a target to be cooled is also greatly changed in accordance with the running state of the vehicle. Accordingly, it was difficult to keep the constant ability of the coolant to cool the heat source.

The present invention has been made in light of the above-described problems. A main object of the present invention is to provide a cooling device capable of improving the constancy of the ability of a coolant to cool a heat source.

### SOLUTION TO PROBLEM

A cooling device according to the present invention serves to cool a heat source, and includes a compressor compressing a coolant; a first heat exchanger performing heat exchange between the coolant and outside air; a decompressor decompressing the coolant; a second heat exchanger performing heat exchange between the coolant and air-conditioning air; a cooling unit connected in parallel with the second heat exchanger and cooling the heat source using the coolant; a first pressure regulating valve disposed on a downstream side of the second heat exchanger and regulating pressure of the coolant flowing through the second heat exchanger; and a second pressure regulating valve disposed on a downstream side of the cooling unit and regulating the pressure of the coolant flowing through the cooling unit. The first pressure regulating valve is regulated in opening degree in accordance with a temperature of the coolant between the decompressor and the first pressure regulating valve. The second pressure regulating valve is regulated in opening degree in accordance with the temperature of the coolant between the decompressor and the second pressure regulating valve.

According to the above-described cooling device, preferably, the first pressure regulating valve is increased in valve opening degree when the temperature of the coolant between the decompressor and the first pressure regulating valve is higher than a set value, and decreased in valve opening degree when the temperature of the coolant between the decompressor and the first pressure regulating valve is lower than the set value. The second pressure regulating valve is increased in valve opening degree when the temperature of the coolant between the decompressor and the second pressure regulating valve is higher than a set value, and decreased in valve opening degree when the temperature of the coolant between the decompressor and the second pressure regulating valve is lower than the set value.

The above-described cooling device preferably includes a gas-liquid separator separating the coolant to be sucked into the compressor into gas and liquid.

According to the above-described cooling device, preferably, the decompressor includes a first flow rate control valve regulating a flow rate of the coolant flowing into the second heat exchanger, and a second flow rate control valve regulating the flow rate of the coolant flowing into the cooling unit.

According to the above-described cooling device, preferably, the first flow rate control valve is regulated in opening degree in accordance with a degree of superheat of the coolant on an outlet side of the second heat exchanger. The second flow rate control valve is regulated in opening degree in accordance with the degree of superheat of the coolant on an outlet side of the cooling unit.

According to the above-described cooling device, preferably, the first flow rate control valve is increased in valve opening degree when the degree of superheat of the coolant on the outlet side of the second heat exchanger is higher than a set value, and decreased in valve opening degree when the degree of superheat of the coolant on the outlet side of the second heat exchanger is lower than the set value. The second flow rate control valve is increased in valve opening degree when the degree of superheat of the coolant on the outlet side of the cooling unit is higher than a set value, and decreased in valve opening degree when the degree of superheat of the coolant on the outlet side of the cooling unit is lower than the set value.

### ADVANTAGEOUS EFFECTS OF INVENTION

According to the cooling device of the present invention, the constancy of the ability of the coolant to cool the heat source can be improved.

### BRIEF DESCRIPTION OF DRAWINGS

Fig. 1 is a schematic diagram showing the configuration of a cooling device according to the first embodiment.
Fig. 2 is a Mollier chart showing the state of a coolant in a vapor compression refrigeration cycle.
Fig. 3 is a block diagram showing details of the configuration of a control unit.
Fig. 4 is a flowchart illustrating an example of a method of controlling the cooling device.
Fig. 5 is a Mollier chart illustrating an isothermal line of the coolant.
Fig. 6 is a schematic diagram showing the configuration of a cooling device according to the second embodiment.
Fig. 7 is a Mollier chart showing the state of a coolant in a vapor compression refrigeration cycle according to the second embodiment.
Fig. 8 is a block diagram showing details of the configuration of a control unit according to the second embodiment.
Fig. 9 is a flowchart illustrating an example of a method of controlling the cooling device according to the second embodiment.

### DESCRIPTION OF EMBODIMENTS

The embodiments of the present invention will be hereinafter described with reference to the accompanying drawings, in which the same or corresponding components are designated by the same reference characters, and description thereof will not be repeated.

### (First Embodiment)

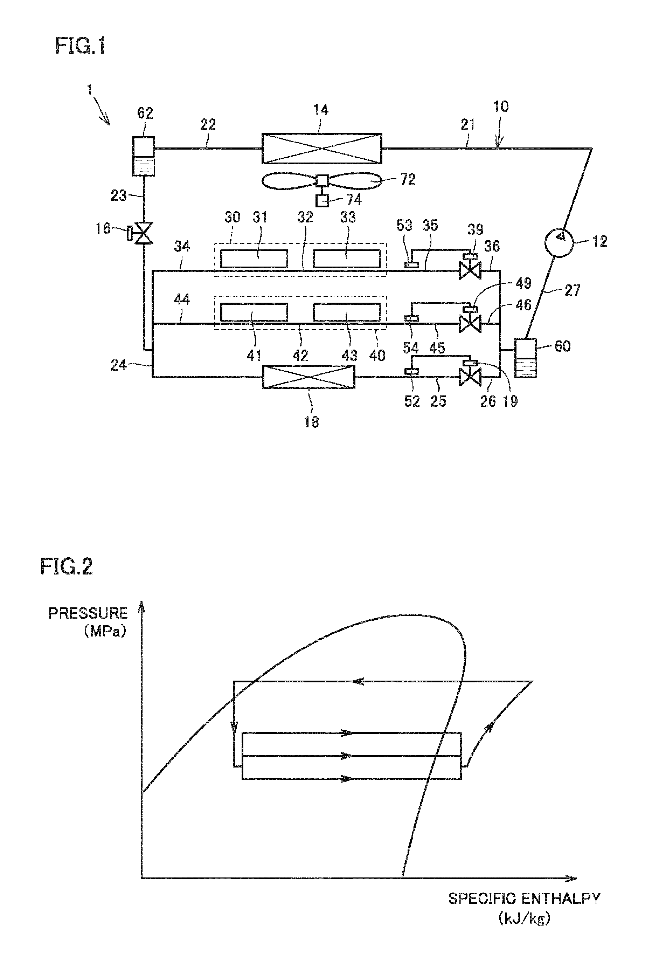

Fig. 1 is a schematic diagram showing the configuration of a cooling device 1 according to the first embodiment. Cooling device 1 according to the present embodiment is applied to a hybrid vehicle including, as power sources, an engine serving as an internal combustion engine and a driving unit serving as an electric motor. This cooling device 1 is used for cooling electric devices mounted in the hybrid vehicle. It is to be noted that cooling device 1 of the present invention can be applied not only to a hybrid vehicle including an engine and an electric motor as power sources, but also to a vehicle including only an electric motor as a power source (both of which will be collectively referred to as an electric vehicle).

As shown in Fig. 1, cooling device 1 includes a vapor compression refrigeration cycle 10. Vapor compression refrigeration cycle 10 is mounted on a vehicle, for example, to perform cooling in a vehicle cabin. Cooling with use of vapor compression refrigeration cycle 10 is performed, for example, when a switch for performing cooling is turned on, or when an automatic control mode for automatically regulating the temperature in the vehicle cabin at a set temperature is selected and the temperature in the vehicle cabin is higher than the set temperature.

Vapor compression refrigeration cycle 10 includes a compressor 12, a heat exchanger 14 as the first heat exchanger, an expansion valve 16 as an example of a decompressor, and a heat exchanger 18 as the second heat exchanger.

Compressor 12 is operated by a motor or an engine mounted on a vehicle as a power source and adiabatically compresses the coolant gas to obtain superheated coolant gas. Compressor 12 takes in and compresses a coolant flowing from heat exchanger 18 during operation of vapor compression refrigeration cycle 10, and then discharges a high-temperature and high-pressure gas-phase coolant to coolant passage 21. Compressor 12 discharges the coolant to coolant passage 21 to allow circulation of the coolant through vapor compression refrigeration cycle 10.

Heat exchanger 14 allows superheated coolant gas compressed by compressor 12 to radiate heat isobarically to an external medium to obtain coolant liquid. The high-pressure gas-phase coolant discharged from compressor 12 is condensed (liquefied) by radiating heat to a periphery of heat exchanger 14 for cooling. Heat exchanger 14 includes a tube through which the coolant flows, and a fin for performing heat exchange between the coolant flowing through the tube and air around heat exchanger 14.

Heat exchanger 14 performs heat exchange between cooling air and the coolant. The cooling air may be supplied to heat exchanger 14 by natural draft generated by vehicle running. Alternatively, the cooling air may be supplied to heat exchanger 14 by forced draft from an outside-air supplying fan such as a condenser fan 72 or a radiator fan for cooling the engine. The heat exchange with outside air in heat exchanger 14 lowers the temperature of the coolant to liquefy the coolant.

Expansion valve 16 allows the high-pressure liquid-phase coolant flowing through coolant passage 25 to be sprayed through a small pore for expansion to achieve a low-temperature, low-pressure mist-like coolant. Expansion valve 16 decompresses the coolant liquid condensed by heat exchanger 14 to obtain moist vapor in a gas-liquid mixed state. In addition, the decompressor for decompressing coolant liquid is not limited to expansion valve 16 performing throttle expansion, but may be a capillary tube or a control valve whose opening degree can be controlled.

Heat exchanger 18 performs heat exchange between the coolant and air-conditioning air, to regulate the temperature of the air-conditioning air. By evaporation of the mist-like coolant flowing through heat exchanger 18, this heat exchanger 18 absorbs heat of ambient air introduced so as to come in contact with heat exchanger 18. By driving of the air-conditioning fan that is not shown, air-conditioning air is supplied to heat exchanger 18. The air-conditioning air may be outside air or may be air in the vehicle cabin.

During the cooling operation, heat exchanger 18 uses the coolant decompressed by expansion valve 16 to absorb heat of evaporation, caused when the moist vapor of the coolant is evaporated to become coolant gas, from the air-conditioning air flowing into the vehicle cabin, so that the vehicle cabin is cooled. The air-conditioning air with a temperature lowered due to absorption of heat by heat exchanger 18 is returned again into the vehicle cabin, so that the vehicle cabin is cooled. The air-conditioning air is cooled in heat exchanger 18. In heat exchanger 18, the coolant absorbs heat from its surroundings by heat transferred from the air-conditioning air and is then heated.

Heat exchanger 18 includes a tube through which the coolant flows, and a fin for heat exchange between the coolant flowing through the tube and the ambient air of heat exchanger 18. The coolant in the state of moist vapor flows through the tube. When flowing through the tube, the coolant is evaporated by absorbing heat of the air within the vehicle cabin via the fin as latent heat of evaporation, and then turned into superheated vapor by sensible heat. The evaporated coolant is sucked into compressor 12. Compressor 12 compresses the coolant in the superheated vapor state flowing from heat exchanger 18.

Vapor compression refrigeration cycle 10 further includes a coolant passage 21 allowing communication between compressor 12 and heat exchanger 14, coolant passages 22 and 23 allowing communication between heat exchanger 14 and expansion valve16, a coolant passage 24 allowing communication between expansion valve 16 and heat exchanger 18, and coolant passages 25, 26 and 27 allowing communication between heat exchanger 18 and compressor 12.

Coolant passage 21 is a passage for causing the coolant to flow from compressor 12 to heat exchanger 14. The coolant flows between compressor 12 and heat exchanger 14 from an outlet of compressor 12 toward an inlet of heat exchanger 14 via coolant passage 21. Coolant passages 22 and 23 each are a passage for causing the coolant to flow from heat exchanger 14 to expansion valve 16. The coolant flows between heat exchanger 14 and expansion valve 16 from an outlet of heat exchanger 14 toward an inlet of expansion valve 16 via coolant passages 22 and 23.

Coolant passage 24 is a passage for causing the coolant to flow from expansion valve 16 to heat exchanger 18. The coolant flows between expansion valve 16 and heat exchanger 18 from an outlet of expansion valve 16 toward the inlet of heat exchanger 18 via coolant passage 24. Coolant passages 25 to 27 each are a passage for causing the coolant to flow from heat exchanger 18 to compressor 12. The coolant flows between heat exchanger 18 and compressor 12 from the outlet of heat exchanger 18 to an inlet of compressor 12 via coolant passages 25 to 27.

Vapor compression refrigeration cycle 10 is configured by compressor 12, heat exchanger 14, expansion valve 16, and heat exchanger 18 coupled via coolant passages 21 to 27. In addition, the coolant used for vapor compression refrigeration cycle 10 may be carbon dioxide, hydrocarbon such as propane and isobutane, ammonia, fluorocarbons, water or the like, for example.

An accumulator 60 is disposed on the route of the coolant between heat exchanger 18 and compressor 12. Accumulator 60 separates the coolant flowing out of heat exchanger 18 into a gas-phase coolant and a liquid-phase coolant. Coolant liquid that is a liquid-phase coolant and coolant vapor that is a gas-phase coolant can be stored within accumulator 60. A coolant passage 26 and a coolant passage 27 are coupled to accumulator 60.

The coolant flowing out of heat exchanger 18 is supplied to accumulator 60 through coolant passages 25 and 26. The coolant flowing through coolant passage 26 into accumulator 60 is separated into a gas-phase coolant and a liquid-phase coolant within accumulator 60. When all of the coolant does not evaporate in heat exchanger 18 or cooling units 30 and 40 described later and the coolant flowing into accumulator 60 is in a gas-liquid two-phase state, accumulator 60 separates the coolant into coolant liquid in the liquid state and coolant vapor in the gaseous state, and temporarily stores the separated liquid and vapor therein. The coolant vapor obtained by gas-liquid separation flows out of accumulator 60 through coolant passage 27, and is sucked into compressor 12.

Coolant passage 27 has an end coupled to the gas-phase side of accumulator 60. This end forms an outlet port through which the gas-phase coolant flows out of accumulator 60. Within accumulator 60, the coolant liquid accumulates on the lower side while the coolant vapor accumulates on the upper side. The end of coolant passage 27 though which coolant vapor flows out of accumulator 60 is coupled to the ceiling portion of accumulator 60. Only the coolant vapor is caused to flow from the ceiling side of accumulator 60 through coolant passage 27 to the outside of accumulator 60. Accordingly, accumulator 60 can reliably separate the gas-phase coolant and the liquid-phase coolant.

A pressure regulating valve 19 is provided between heat exchanger 18 and accumulator 60. Coolant passage 25 forms a route of the coolant between heat exchanger 18 and pressure regulating valve 19. Coolant passage 26 forms a route of the coolant between pressure regulating valve 19 and accumulator 60. Pressure regulating valve 19 is a valve provided on the downstream side of heat exchanger 18 and different from expansion valve 16 as a decompressor described above. Pressure regulating valve 19 has a function as the first pressure regulating valve regulating the pressure of the coolant flowing through heat exchanger 18.

When the opening degree of pressure regulating valve 19 is increased, the pressure loss of the coolant flowing through pressure regulating valve 19 becomes relatively small, thereby decreasing the pressure difference between the coolant flowing through coolant passage 25 and the coolant flowing through coolant passage 26. Accordingly, the pressure of the coolant flowing through heat exchanger 18 becomes closer to the pressure of the coolant sucked into compressor 12. When the opening degree of pressure regulating valve 19 is relatively large, the pressure of the coolant flowing through heat exchanger 18 becomes relatively low. By regulating the opening degree of pressure regulating valve 19 and controlling pressure regulating valve 19 to be increased in opening degree, the pressure of the coolant flowing through heat exchanger 18 can be lowered.

When the opening degree of pressure regulating valve 19 is decreased, the pressure loss of the coolant flowing through pressure regulating valve 19 becomes relatively large, thereby increasing the pressure difference between the coolant flowing through coolant passage 25 and the coolant flowing through coolant passage 26. Accordingly, the pressure of the coolant flowing through heat exchanger 18 becomes different from the pressure of the coolant sucked into compressor 12. When the opening degree of pressure regulating valve 19 is relatively small, the pressure of the coolant flowing through heat exchanger 18 becomes relatively high. By regulating the opening degree of pressure regulating valve 19 and controlling pressure regulating valve 19 to be decreased in opening degree, the pressure of the coolant flowing through heat exchanger 18 can be raised.

Coolant passage 25 is provided with a temperature detection unit 52 detecting the temperature of the coolant flowing out of heat exchanger 18 and into coolant passage 25. Pressure regulating valve 19 is controlled in opening degree based on the coolant temperature detected by temperature detection unit 52. Specifically, when the temperature of the coolant flowing through coolant passage 25 is higher than a target value, the opening degree of pressure regulating valve 19 is increased. When the temperature of the coolant flowing through coolant passage 25 is lower than the target value, the opening degree of pressure regulating valve 19 is decreased.

Vapor compression refrigeration cycle 10 also includes a receiver 62 disposed on the route of the coolant between heat exchanger 14 and expansion valve 16. Receiver 62 serves to separate the coolant flowing out of heat exchanger 14 into a gas-phase coolant and a liquid-phase coolant. Coolant liquid that is a liquid-phase coolant and coolant vapor that is a gas-phase coolant can be stored within receiver 62. Coolant passages 22 and 23 are coupled to receiver 62.

The coolant flowing out of heat exchanger 14 is supplied to receiver 62 through coolant passage 22. The coolant flowing from coolant passage 22 into receiver 62 is separated into a gas phase and a liquid phase within receiver 62. When all of the coolant does not condense in heat exchanger 14 but the coolant flowing into receiver 62 is in a gas-liquid two-phase state, receiver 62 separates the coolant into coolant liquid in the liquid state and coolant vapor in the gaseous state, and temporarily stores the separated liquid and vapor therein. The coolant liquid obtained by gas-liquid separation flows to the outside of receive 62 through coolant passage 23.

Coolant passage 23 has an end coupled to the liquid-phase side of receiver 62. This end forms an outlet port through which the liquid-phase coolant flows out of receiver 62. Within receiver 62, the coolant liquid accumulates on the lower side while the coolant vapor accumulates on the upper side. Coolant passage 23 has an end through which the coolant liquid is caused to flow out of receiver 62. This end is coupled to the bottom of receiver 62. Only the coolant liquid is caused to flow from the bottom side of receiver 62 through coolant passage 23 to the outside of receiver 62. Accordingly, receiver 62 can reliably separate the coolant into a gas-phase coolant and a liquid-phase coolant.

Cooling units 30 and 40 connected in parallel with heat exchanger 18 are disposed on the route of the coolant flowing from expansion valve 16 toward accumulator 60. Cooling device 1 includes a coolant route connected in parallel with heat exchanger 18. On this coolant route, cooling units 30 and 40 are provided. Heat exchanger 18 is provided in one of a plurality of passages connected in parallel in the route of the coolant flowing between expansion valve 16 and accumulator 60. Cooling unit 30 is provided in another passage of the plurality of passages, and cooling unit 40 is provided in still another passage of the plurality of passages.

Coolant passages 34 and 44 branch from coolant passage 24 between expansion valve 16 and heat exchanger 18. Coolant passage 34 allows communication between coolant passage 24 and cooling unit 30. The coolant flows from coolant passage 24 through coolant passage 34 into cooling unit 30. Coolant passage 44 allows communication between coolant passage 24 and cooling unit 40. The coolant flows from coolant passage 24 through coolant passage 44 into cooling unit 40.

Cooling unit 30 includes HV (Hybrid Vehicle) devices 31 and 33 that are electric devices mounted in an electric vehicle, and a cooling passage 32 serving as a pipe line through which a coolant flows. Cooling unit 40 includes HV devices 41 and 43 that are electric devices mounted in an electric vehicle, and a cooling passage 42 serving as a pipe line through which a coolant flows. HV devices 31, 33, 41, and 43 each are an example of a heat source which generates heat by supply and reception of electric power.

HV devices 31, 33, 41, and 43 each include, for example, at least any one of an inverter for converting direct-current (DC) power into alternate-current (AC) power, a motor generator as a rotating electric machine, a battery as a power storage device, a boost converter for boosting the voltage of the battery, a DC/DC converter for stepping down the voltage of the battery, and the like. The battery is a secondary battery such as a lithium ion battery or a nickel-metal hydride battery. In place of the battery, a capacitor may be employed. For example, HV devices 31 and 33 each may be an inverter, HV device 41 may be a battery, and HV device 43 may be a capacitor.

The coolant liquid flowing out of receiver 62 flows toward cooling unit 30 through coolant passage 34, and flows toward cooling unit 40 through coolant passage 44. The coolant reaching cooling units 30 and 40 and flowing through cooling passages 32 and 42 absorbs heat from each of HV devices 31, 33 and 41, 43, respectively, as heat sources, to cool these HV devices. Cooling units 30 and 40 cool HV devices 31, 33 and 41, 43, respectively, using the liquid-phase coolant separated in receiver 62. In cooling unit 30, heat is exchanged between the coolant flowing through cooling passage 32 and each of HV devices 31 and 33. Also, in cooling unit 40, heat is exchanged between the coolant flowing through cooling passage 42 and each of HV devices 41 and 43. Consequently, HV devices 31, 33, 41, and 43 are cooled while the coolant is heated.

Cooling units 30 and 40 are provided so as to have structures allowing heat exchange between the coolant and HV devices 31, 33 in cooling passage 32, and between the coolant and HV devices 41, 43 in cooling passage 42, respectively. In the present embodiment, cooling units 30 and 40 have cooling passages 32 and 42, respectively, formed for example such that the outer peripheral surfaces of cooling passages 32 and 42 are brought into direct contact with housings of HV devices 31, 33 and 41, 43, respectively. Cooling passages 32 and 42 have portions that are adjacent to the housings of HV devices 31, 33 and 41, 43, respectively. In these portions, heat can be exchanged between the coolant flowing through coolant passage 32 and HV devices 31, 33, and also between the coolant flowing through coolant passage 42 and HV devices 41, 43.

HV devices 31, 33 and 41, 43 are directly connected to the outer peripheral surfaces of cooling passages 32 and 42, respectively, that form a part of the coolant route extending from expansion valve 16 to accumulator 60 in vapor compression refrigeration cycle 10. Thus, HV devices 31, 33 and 41, 43 are cooled. Since HV devices 31, 33 and 41, 43 are disposed on the outside of cooling passages 32 and 42, respectively, HV devices 31, 33 and 41, 43 do not interfere with the flow of the coolant flowing through cooling passages 32 and 42, respectively. Therefore, since the pressure loss of vapor compression refrigeration cycle 10 does not increase, HV devices 31, 33, 41, and 43 can be cooled without increasing the motive power of compressor 12.

Alternatively, cooling units 30 and 40 may include optional known heat pipes arranged between HV devices 31, 33 and cooling passage 32, and between HV devices 41, 43 and cooling passage 42, respectively. In this case, HV devices 31, 33 and 41, 43 are connected to the outer peripheral surfaces of cooling passages 32 and 42, respectively, via each heat pipe, and cooled by heat transfer from HV devices 31, 33 and 41, 43 to cooling passages 32 and 42, respectively, via each heat pipe. HV devices 31, 33, 41, and 43 each are used as a heating unit of the heat pipe while cooling passages 32 and 42 each are used as a cooling unit of the heat pipe, thereby raising the heat transfer efficiency between cooling passage 32 and HV devices 31, 33, and between cooling passage 42 and HV devices 41, 43. Consequently, the cooling efficiency for HV devices 31, 33, 41, and 43 can be improved. For example, a wick-type heat pipe can be used.

Since the heat pipe can reliably transfer heat from HV devices 31, 33 and 41, 43 to cooling passages 32 and 42, respectively, HV devices 31, 33 and 41, 43 may be spaced apart from cooling passages 32 and 42, respectively. Thus, cooling passages 32 and 42 do not have to be arranged in a complicated manner for bringing cooling passages 32 and 42 into contact with HV devices 31, 33 and 41, 43, respectively. Consequently, the degree of freedom in arrangement of HV devices 31, 33, 41, and 43 can be improved.

The coolant heated by heat exchange with HV devices 31 and 33 by cooling HV devices 31 and 33 in cooling unit 30 returns to coolant passage 26 through coolant passages 35 and 36. The coolant routes connected in parallel with the route of the coolant flowing through heat exchanger 18 includes coolant passage 34 on the upstream side of cooling unit 30 (on the side close to expansion valve 16), cooling passage 32 included in cooling unit 30, and coolant passages 35 and 36 on the downstream side of cooling unit 30 (on the side close to accumulator 60). Coolant passages 34 and 35 are connected to cooling unit 30. Cooling passage 32 has one end connected to coolant passage 34, and the other end connected to coolant passage 35.

Coolant passage 34 is a passage for allowing communication between coolant passage 24 and cooling unit 30, and for causing the coolant cooled at expansion valve 16 to flow into cooling unit 30. The coolant liquid flows from coolant passage 24 through coolant passage 34 into cooling unit 30. Coolant passages 35 and 36 each are a passage for allowing communication between cooling unit 30 and coolant passage 26, and for causing the coolant to flow from cooling unit 30 into coolant passage 26. The coolant having passed through cooling unit 30 returns to coolant passage 26 through coolant passages 35 and 36, and reaches accumulator 60 through coolant passage 26.

A pressure regulating valve 39 is provided between cooling unit 30 and coolant passage 26. Coolant passage 35 forms a route of the coolant between cooling unit 30 and pressure regulating valve 39. Coolant passage 36 forms a route of the coolant between pressure regulating valve 39 and coolant passage 26. Pressure regulating valve 39 is a valve provided on the downstream side of cooling unit 30 and different from expansion valve 16 and pressure regulating valve 19 described above. Pressure regulating valve 39 has a function as the second pressure regulating valve regulating the pressure of the coolant flowing through cooling unit 30.

When the opening degree of pressure regulating valve 39 is increased, the pressure loss of the coolant flowing through pressure regulating valve 39 becomes relatively small, thereby decreasing the pressure difference between the coolant flowing through coolant passage 35 and the coolant flowing through coolant passage 36. Accordingly, the pressure of the coolant flowing through cooling unit 30 becomes closer to the pressure of the coolant sucked into compressor 12. When the opening degree of pressure regulating valve 39 is relatively large, the pressure of the coolant flowing through cooling unit 30 becomes relatively low. By regulating the opening degree of pressure regulating valve 39 and controlling pressure regulating valve 39 to be increased in opening degree, the pressure of the coolant flowing through cooling unit 30 can be lowered.

When the opening degree of pressure regulating valve 39 is decreased, the pressure loss of the coolant flowing through pressure regulating valve 39 becomes relatively large, thereby increasing the pressure difference between the coolant flowing through coolant passage 35 and the coolant flowing through coolant passage 36. Accordingly, the pressure of the coolant flowing through cooling unit 30 becomes different from the pressure of the coolant sucked into compressor 12. When the opening degree of pressure regulating valve 39 is relatively small, the pressure of the coolant flowing through cooling unit 30 becomes relatively high. By regulating the opening degree of pressure regulating valve 39 and controlling pressure regulating valve 39 to be decreased in opening degree, the pressure of the coolant flowing through cooling unit 30 can be raised.

Coolant passage 35 is provided with a temperature detection unit 53 detecting the temperature of the coolant flowing out of cooling unit 30 and into coolant passage 35. Pressure regulating valve 39 is controlled in opening degree based on the temperature of the coolant detected by temperature detection unit 53. Specifically, the opening degree of pressure regulating valve 39 is increased when the temperature of the coolant flowing through coolant passage 35 is higher than a target value; and the opening degree of pressure regulating valve 39 is decreased when the temperature of the coolant flowing through coolant passage 35 is lower than the target value.

The coolant heated by heat exchange with HV devices 41 and 43 by cooling HV devices 41 and 43 in cooling unit 40 flows through coolant passages 45 and 46 back to coolant passage 26. The coolant routes connected in parallel with the route of the coolant flowing through heat exchanger 18 include coolant passage 44 on the upstream side of cooling unit 40 (on the side close to expansion valve 16), a cooling passage 42 included in cooling unit 40, and coolant passages 45 and 46 on the downstream side of cooling unit 40 (on the side close to accumulator 60). Coolant passages 44 and 45 are connected to cooling unit 40. Cooling passage 42 has one end connected to coolant passage 44, and the other end connected to coolant passage 45.

Coolant passage 44 is a passage for allowing communication between coolant passage 24 and cooling unit 40, and for causing the coolant cooled at expansion valve 16 to flow through cooling unit 40. The coolant liquid flows from coolant passage 24 through coolant passage 44 into cooling unit 40. Coolant passages 45 and 46 each are a passage for allowing communication between cooling unit 40 and coolant passage 26, and for causing the coolant to flow from cooling unit 40 into coolant passage 26. The coolant having passed through cooling unit 40 returns to coolant passage 26 through coolant passages 45 and 46, and reaches accumulator 60 through coolant passage 26.

A pressure regulating valve 49 is provided between cooling unit 40 and coolant passage 26. Coolant passage 45 forms a route of the coolant between cooling unit 40 and pressure regulating valve 49. Coolant passage 46 forms a route of the coolant between pressure regulating valve 49 and coolant passage 46. Pressure regulating valve 49 is a valve provided on the downstream side of cooling unit 40 and different from expansion valve 16 and pressure regulating valve 19 described above. Pressure regulating valve 49 has a function as the second pressure regulating valve regulating the pressure of the coolant flowing through cooling unit 40.

When the opening degree of pressure regulating valve 49 is increased, the pressure loss of the coolant flowing through pressure regulating valve 49 becomes relatively small, thereby decreasing the pressure difference between the coolant flowing through coolant passage 45 and the coolant flowing through coolant passage 46. Accordingly, the pressure of the coolant flowing through cooling unit 40 becomes closer to the pressure of the coolant sucked into compressor 12. When the opening degree of pressure regulating valve 49 is relatively large, the pressure of the coolant flowing through cooling unit 40 becomes relatively low. By regulating the opening degree of pressure regulating valve 49 and controlling pressure regulating valve 49 to be increased in opening degree, the pressure of the coolant flowing through cooling unit 40 can be lowered.

When the opening degree of pressure regulating valve 49 is decreased, the pressure loss of the coolant flowing through pressure regulating valve 49 becomes relatively large, thereby increasing the pressure difference between the coolant flowing through coolant passage 45 and the coolant flowing through coolant passage 46. Accordingly, the pressure of the coolant flowing through cooling unit 40 becomes different from the pressure of the coolant sucked into compressor 12. When the opening degree of pressure regulating valve 49 is relatively small, the pressure of the coolant flowing through cooling unit 40 becomes relatively high. By regulating the opening degree of pressure regulating valve 49 and controlling pressure regulating valve 49 to be decreased in opening degree, the pressure of the coolant flowing through cooling unit 40 can be raised.

Coolant passage 45 is provided with a temperature detection unit 54 detecting the temperature of the coolant flowing out of cooling unit 40 and into coolant passage 45. Pressure regulating valve 49 is controlled in opening degree based on the coolant temperature detected by temperature detection unit 54. Specifically, the opening degree of pressure regulating valve 49 is increased when the temperature of the coolant flowing through coolant passage 45 is higher than a target value, and the opening degree of pressure regulating valve 49 is decreased when the temperature of the coolant flowing through coolant passage 45 is lower than the target value.

Fig. 2 is a Mollier chart showing the state of the coolant in vapor compression refrigeration cycle 10. In Fig. 2, the horizontal axis denotes a specific enthalpy of the coolant while the vertical axis denotes an absolute pressure of the coolant. The unit of the specific enthalpy is kJ/kg and the unit of the absolute pressure is MPa. The curve shown in the figure is a saturated vapor line and a saturated liquid line of the coolant.

Fig. 2 shows a thermal dynamic state of the coolant passing through a coolant circulating flow passage including compressor 12, heat exchanger 14, expansion valve 16, and heat exchanger 18 sequentially connected by coolant passages 21 to 27, and circulating in vapor compression refrigeration cycle 10. Fig. 2 also shows a thermal dynamic state of the coolant flowing through cooling unit 30 connected in parallel with heat exchanger 18 and cooling HV devices 31 and 33 in cooling unit 30. Fig. 2 further shows a thermal dynamic state of the coolant flowing through cooling unit 40 connected in parallel with heat exchanger 18, and cooling HV devices 41 and 43 in cooling unit 40.

As shown in Fig. 2, the coolant in the superheated vapor state taken into compressor 12 is adiabatically compressed along an isentropic line in compressor 12. As the compression progresses, the coolant rises in pressure and temperature, and turns into high-temperature and high-pressure superheated vapor with a high degree of superheat, and then, flows toward heat exchanger 14. The gas-phase coolant discharged from compressor 12 dissipates heat to the surroundings and is cooled in heat exchanger 14, and thereby condenses (liquefies). Due to heat exchange with outside air in heat exchanger 14, the temperature of the coolant drops, and the coolant liquefies. The high-pressure coolant vapor flowing into heat exchanger 14 turns from superheated vapor into dry saturated vapor, isobarically, in heat exchanger 14, releases latent heat of condensation, and liquefies gradually to a wet vapor in a gas-liquid mixed state. When all the coolant is condensed, it turns into saturated liquid, and turns into supercooled liquid which has been supercooled by radiating sensible heat.

Then, the coolant flows into expansion valve 16 through coolant passages 22 and 23. At expansion valve 16, the coolant in the supercooled liquid state undergoes throttle expansion, and the temperature and pressure are lowered without a change in a specific enthalpy, so that low-temperature and low-pressure moist vapor in the gas-liquid mixed state is obtained.

The coolant in the moist vapor state flowing out of expansion valve 16 flows into heat exchanger 18 through coolant passage 24. The coolant in the moist vapor state flows into the tube of heat exchanger 18. When flowing through the tube of heat exchanger 18, the coolant absorbs heat of the air-conditioning air as latent heat of evaporation via the fin, thereby being evaporated while maintaining the equal pressure. When all the coolant becomes dry saturated vapor, the coolant vapor is further increased in temperature due to the sensible heat, and then, turns into superheated vapor.

The coolant in the moist vapor state flowing out of expansion valve 16 also flows into cooling passage 32 of cooling unit 30 through coolant passage 34, and cools HV devices 31 and 33. In cooling unit 30, HV devices 31 and 33 are cooled by emitting heat to the coolant. By heat exchange with HV devices 31 and 33, the coolant absorbs heat from HV devices 31 and 33 as latent heat of evaporation, and is thereby heated and evaporated while maintaining the equal pressure. Thus, the dryness of the coolant is increased. When all the coolant turns into dry saturated vapor, the coolant vapor is further increased in temperature by sensible heat and turns into superheated vapor.

The coolant in the moist vapor state flowing out of expansion valve 16 also flows into cooling passage 42 of cooling unit 40 through coolant passage 44, and cools HV devices 41 and 43. In cooling unit 40, HV devices 41 and 43 are cooled by emitting heat to the coolant. By heat exchange with HV devices 41 and 43, the coolant absorbs heat from HV devices 41 and 43 as latent heat of evaporation, and is thereby heated and evaporated while maintaining the equal pressure. Thus, the dryness of the coolant is increased. When all the coolant turns into dry saturated vapor, the coolant vapor is further increased in temperature by sensible heat and turns into superheated vapor.

Then, the coolant is sucked into compressor 12 through accumulator 60. Compressor 12 compresses the gas-phase coolant flowing from accumulator 60.

In accordance with such a cycle, the coolant continuously repeats the state changes of compression, condensation, throttle expansion, and evaporation. In the description of the vapor compression refrigeration cycle set forth above, the theoretical refrigeration cycle is described. However, in actual vapor compression refrigeration cycle 10, loss in compressor 12, and pressure loss and heat loss in the coolant should be taken into consideration.

During the operation of vapor compression refrigeration cycle 10, the coolant absorbs heat of evaporation from the air-conditioning air for the vehicle when it evaporates in heat exchanger 18 acting as an evaporator. Thereby, this coolant cools the vehicle cabin. In addition, the low-temperature and low-pressure coolant having undergone throttle expansion at expansion valve 16 flows into cooling units 30 and 40, exchanges heat with HV devices 31, 33, 41, and 43, thereby cooling HV devices 31, 33, 41, and 43. Utilizing vapor compression refrigeration cycle 10 for air conditioning in the vehicle cabin, cooling device 1 cools HV devices 31, 33, 41, and 43 serving as heat sources mounted in the vehicle. It is desirable that the temperature required for cooling HV devices 31, 33, 41, and 43 is at least lower than the upper limit value of the target temperature range as a temperature range of HV devices 31, 33, 41, and 43.

Since HV devices 31, 33, 41, and 43 are cooled utilizing vapor compression refrigeration cycle 10 provided for cooling air-conditioning air in heat exchanger 18, there is no need to provide devices such as a dedicated water circulating pump or cooling fan for cooling HV devices 31, 33, 41, and 43. Accordingly, since the configuration required for cooling device 1 of HV devices 31, 33, 41, and 43 can be reduced and the device configuration can be simplified, the production cost for cooling device 1 can be reduced. In addition, since there is no need to operate a power source such as a pump and a cooling fan for cooling HV devices 31, 33, 41, and 43, the power consumption for operating the power source is not required. Therefore, the power consumption for cooling HV devices 31, 33, 41, and 43 can be reduced.

As a route through which the coolant flows from expansion valve 16 to accumulator 60, a route through which the coolant flows via heat exchanger 18, a route through which the coolant flows via cooling unit 30 to cool HV devices 31 and 33, and a route through which the coolant flows via cooling unit 40 to cool HV devices 41 and 43 are arranged in parallel. The low-temperature and low-pressure coolant at the outlet of expansion valve 16 is distributed to heat exchanger 18, cooling unit 30 and cooling unit 40. The coolant having undergone throttle expansion at expansion valve 16 is divided into a coolant cooling air-conditioning air in heat exchanger 18, a coolant cooling HV devices 31 and 33 in cooling unit 30, and a coolant cooling HV devices 41 and 43 in cooling unit 40.

The pressure of the coolant flowing through heat exchanger 18 is controlled by the opening degree of pressure regulating valve 19. The pressure of the coolant flowing through cooling unit 30 is controlled by the opening degree of pressure regulating valve 39. The pressure of the coolant flowing through cooling unit 40 is controlled by the opening degree of pressure regulating valve 49. By optimally controlling the opening degrees of pressure regulating valves 19, 39 and 49, the pressure of the coolant flowing through each of the coolant routes arranged in parallel can be optimally controlled. Fig. 2 shows the state where the coolants flowing through heat exchanger 18 and cooling units 30 and 40 are different in pressure, the coolant in the moist vapor state that has undergone throttle expansion at expansion valve 16 is divided into three routes arranged in parallel, and the coolants having passed through these three routes join again and flow into compressor 12.

Receiver 62 is provided on the downstream side of heat exchanger 14. The coolant liquid in the supercooled liquid state is stored in this receiver 62. Receiver 62 functions as a liquid storage container temporarily storing coolant liquid that is a liquid-state coolant. When a prescribed amount of coolant liquid is accumulated in receiver 62 having a liquid reservoir function, receiver 62 can serve as a buffer against load changes and absorb these load changes. Accordingly, since the flow rate of the coolant flowing into cooling units 30 and 40 can be maintained also while load changes occur, the cooling performance for HV devices 31, 33, 41, and 43 can be stabilized.

Accumulator 60 is provided on the upstream side of compressor 12. When the coolant flowing into accumulator 60 is not superheated vapor but is in a gas-liquid two-phase state, accumulator 60 functions as a gas-liquid separator separating the coolant into a gas phase and a liquid phase. Only the coolant vapor obtained by gas-liquid separation flows out of accumulator 60, so that the coolant sucked into compressor 12 is in a gaseous state. Accordingly, it becomes possible to reliably prevent occurrence of defects such as a failure of compressor 12 caused by a liquid-phase coolant flowing into compressor 12.

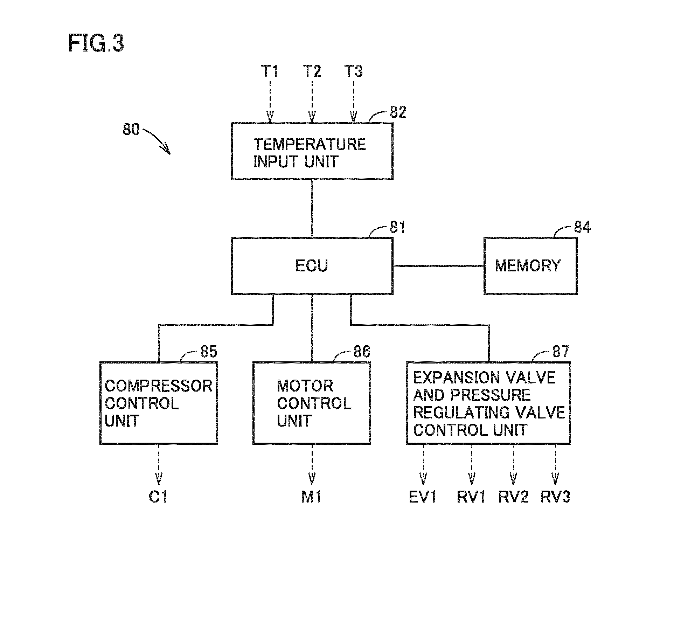

Hereinafter described will be details of control of cooling device 1 according to the first embodiment. Fig. 3 is a block diagram showing details of the configuration of a control unit 80. Control unit 80 shown in Fig. 3 includes an ECU (Electric Control Unit) 81 controlling cooling device 1. From temperature input unit 82, ECU 81 receives a signal indicating the temperature of the coolant. Temperature input unit 82 receives a signal T1 indicating the temperature of the coolant flowing through coolant passage 25 that has been detected by temperature detection unit 52, a signal T2 indicating the temperature of the coolant flowing through coolant passage 35 that has been detected by temperature detection unit 53, and a signal T3 indicating the temperature of the coolant flowing through coolant passage 45 that has been detected by temperature detection unit 54.

Control unit 80 also includes a compressor control unit 85 controlling the operation of compressor 12 to start and stop, and the rotation speed of this compressor 12; a motor control unit 86 controlling the rotation speed of motor 74 for rotary drive of condenser fan 72; and an expansion valve and pressure regulating valve control unit 87 controlling the opening degrees of expansion valve 16 and pressure regulating valves 19, 39 and 49. Control unit 80 also includes a memory 84 such as an RAM (Random Access Memory) and an ROM (Read Only Memory). Cooling device 1 is controlled by ECU 81 executing various processes in accordance with the control program stored in memory 84.

Compressor control unit 85 receives a control instruction transmitted from ECU 81, and transmits a signal C1 to compressor 12 that instructs compressor 12 to start or stop, or that gives an instruction for the rotation speed of compressor 12. Motor control unit 86 receives a control instruction transmitted from ECU 81, and transmits a signal M1 to motor 74 that gives an instruction for the rotation speed of motor 74. Expansion valve and pressure regulating valve control unit 87 receives a control instruction transmitted from ECU 81, transmits a signal RV1 to pressure regulating valve 19 that gives an instruction for the opening degree of pressure regulating valve 19, transmits a signal RV2 to pressure regulating valve 39 that gives an instruction for the opening degree of pressure regulating valve 39, and transmits a signal RV3 to pressure regulating valve 49 that gives an instruction for the opening degree of pressure regulating valve 49. Pressure regulating valves 19, 39 and 49 each are an electric expansion valve, and changed in opening degree in accordance with signals RV1, RV2 and RV3, respectively, transmitted from control unit 80. Expansion valve and pressure regulating valve control unit 87 also receives a control instruction transmitted from ECU 81 and transmits a signal EV1 to the expansion valve that gives an instruction for the opening degree of expansion valve 16. Expansion valve 16 is changed in opening degree in accordance with signal EV1 transmitted from control unit 80.

ECU 81 compares each temperature input into temperature input unit 82 with the target value of the coolant temperature stored in memory 84. In accordance with this comparison result, ECU 81 controls the opening degrees of pressure regulating valves 19, 39 and 49. ECU 81 has a function as a valve opening degree regulation unit regulating the opening degrees of pressure regulating valves 19, 39 and 49.

Motor 74 is coupled to condenser fan 72 and drives condenser fan 72 to rotate. When the rotation speed of motor 74 is changed, the amount of heat exchange between the coolant and outside air in heat exchanger 14 is controlled. When the rotation speed of motor 74 is increased to increase the rotation speed of condenser fan 72, the flow rate of the air supplied to heat exchanger 14 is increased, and the amount of heat exchange between the coolant and outside air in heat exchanger 14 is increased. Consequently, the coolant cooling ability of heat exchanger 14 is improved. When the rotation speed of motor 74 is decreased to lower the rotation speed of condenser fan 72, the flow rate of the air supplied to heat exchanger 14 is decreased, and the amount of heat exchange between the coolant and outside air in heat exchanger 14 is decreased. Consequently, the coolant cooling ability of heat exchanger 14 is deteriorated.

The rotation speed of compressor 12 and the rotation speed of motor 74 driving condenser fan 72 for supplying cooling air to heat exchanger 14 are controlled appropriately such that coolant liquid may always be stored in receiver 62 and a liquid-state coolant may always be supplied to cooling units 30 and 40.

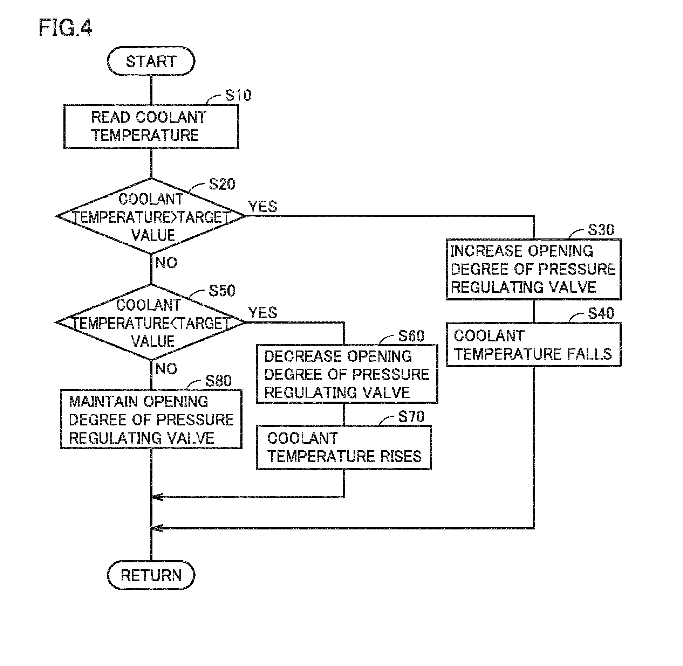

Fig. 4 is a flowchart illustrating an example of a method of controlling cooling device 1. Fig. 4 shows an example of the control flow at the time when the temperature of the coolant flowing through heat exchanger 18 and cooling units 30 and 40 are optimally controlled by regulating the opening degrees of pressure regulating valves 19, 39 and 49 of cooling device 1. Although the following description will provide an explanation of an example in which the opening degree of pressure regulating valve 39 is changed for controlling the temperature of the coolant flowing through cooling unit 30, other pressure regulating valves 19 and 49 are also controlled in the same manner as in the example described below.

As shown in Fig. 4, the temperature of the coolant flowing through cooling unit 30 is first read in step (S10). Specifically, temperature detection unit 53 is used to detect the temperature of the coolant flowing through coolant passage 35 that has undergone heat exchange with HV devices 31 and 33 in cooling unit 30. Signal T2 indicating the temperature detected by temperature detection unit 53 is transmitted from temperature detection unit 53 to temperature input unit 82, and input into ECU 81, thereby reading the coolant temperature.

Then, it is determined in step (S20) whether the temperature of the coolant flowing through cooling unit 30 exceeds a target temperature value or not. When it is determined in step (S20) that the coolant temperature exceeds the target value, the opening degree of pressure regulating valve 39 is increased in step (S30). In step (S40), the coolant temperature falls in accordance with this regulation of the opening degree of pressure regulating valve 39. As to the target value of the coolant temperature, a certain specific temperature may be set as a target value, or a specific temperature range having upper and lower limit values may be set as a target value.

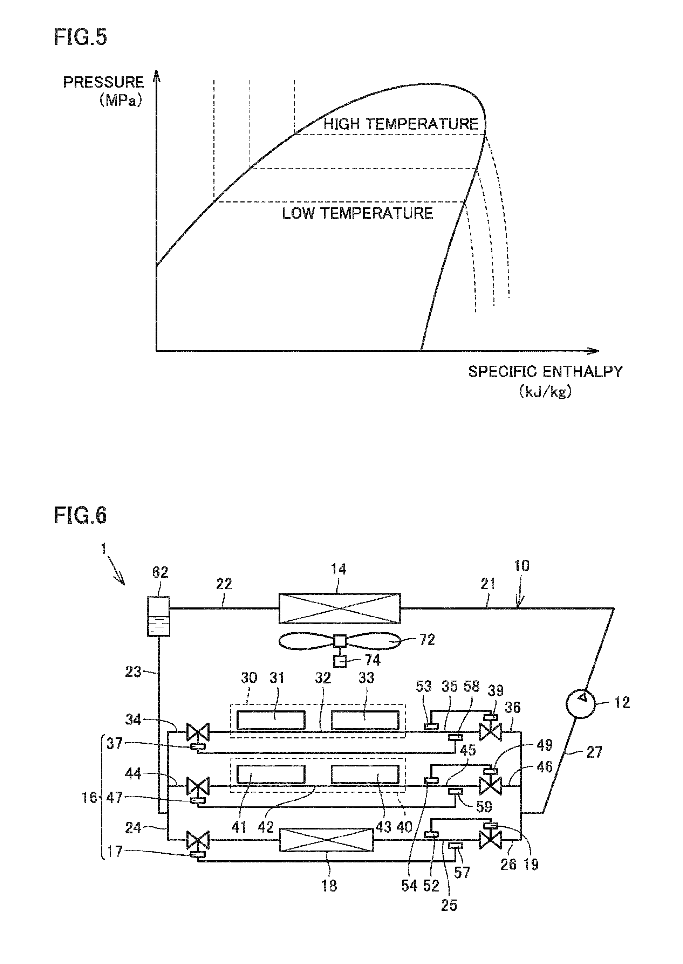

Fig. 5 is a Mollier chart illustrating an isothermal line of the coolant. In Fig. 5, the horizontal axis denotes a specific enthalpy of the coolant while the vertical axis denotes an absolute pressure of the coolant. The unit of the specific enthalpy is kJ/kg and the unit of the absolute pressure is MPa. The curve shown in the figure is a saturated vapor line and a saturated liquid line of the coolant. The dotted line in the figure shows an isothermal line of the coolant. The isothermal line on the lower side of the figure shows an isothermal line of the coolant having a relatively lower temperature while the isothermal line on the upper side of the figure shows an isothermal line of the coolant having a relatively higher temperature.

As has been described with reference to Fig. 2, the coolant cooling HV devices 31 and 33 in cooling unit 30 flows into cooling unit 30 while being in a gas-liquid two-phase state. This coolant is increased in dryness as it is heated by heat exchange with HV devices 31 and 33, thereby turning into dry saturated vapor, and further turning into superheated vapor. Most of the coolant flowing through cooling passage 32 of cooling unit 30 is in the state of moist vapor in the gas-liquid two-phase state. In the gas-liquid two-phase state, as shown in Fig. 5, when the pressure of the coolant is low, the temperature is also low, and when the pressure of the coolant is high, the temperature is also high. In other words, by raising or lowering the pressure of the coolant in the gas-liquid two-phase state, the temperature of the coolant can be arbitrarily raised or lowered.

Thus, when the coolant temperature exceeds a target value, the opening degree of pressure regulating valve 39 is increased to lower the pressure of the coolant flowing through cooling unit 30, so that the temperature of the coolant flowing through cooling unit 30 can be lowered. The reason why the coolant temperature is high is that the coolant was excessively heated in cooling unit 30, for example, due to a relatively large amount of generated heat from HV devices 31 and 33, and the like. In this case, it is considered that HV devices 31 and 33 are not sufficiently cooled. Therefore, the temperature of the coolant flowing through cooling unit 30 is lowered, to improve the cooling ability for HV devices 31 and 33 in cooling unit 30, so that HV devices 31 and 33 can be appropriately cooled, and overheating of HV devices 31 and 33 can be avoided.

Referring back to Fig. 4, when it is determined in step (S20) that the coolant temperature is equal to or lower than the target value, it is then determined in step (S50) whether the temperature of the coolant flowing through cooling unit 30 is lower than the target temperature value or not. When it is determined in step (S50) that the coolant temperature is lower than the target value, the opening degree of pressure regulating valve 39 is then decreased in step (S60). In step (S70), the coolant temperature rises in accordance with this regulation of the opening degree of pressure regulating valve 39.

Referring to Fig. 5, when the coolant temperature is lower than the target value, the opening degree of pressure regulating valve 39 is decreased to raise the pressure of the coolant flowing through cooling unit 30, so that the temperature of the coolant flowing through cooling unit 30 can be raised. The reason why the coolant temperature is low is that the coolant is excessively supplied to cooling unit 30, for example, due to a relatively small amount of generated heat from HV devices 31 and 33, and the like. In this case, it is considered that HV devices 31 and 33 are excessively cooled. Therefore, the temperature of the coolant flowing through cooling unit 30 is raised to lower the cooling ability for HV devices 31 and 33 in cooling unit 30, so that HV devices 31 and 33 can be appropriately cooled.

Referring back to Fig. 4, when it is determined in step (S50) that the coolant temperature is equal to or higher than the target value, that is, when it is determined that the temperature of the coolant flowing through cooling unit 30 is equal to the target temperature, the opening degree of pressure regulating valve 39 is maintained in step (S80). After steps (S40), (S70) or (S80) shown in Fig. 4, the control flow is returned to step (S10) in which the coolant temperature is read again.

As described above, in cooling device 1 of the present embodiment, pressure regulating valve 19 is provided on the downstream side of heat exchanger 18, pressure regulating valve 39 is provided on the downstream side of cooling unit 30, and pressure regulating valve 49 is provided on the downstream side of cooling unit 40. By regulating the opening degrees of pressure regulating valves 19, 39 and 49, the temperature of the coolant flowing through each of heat exchanger 18 and cooling units 30 and 40 can be controlled. By regulating the opening degree of pressure regulating valve 19, the pressure of the coolant flowing through heat exchanger 18 is increased or decreased, and thus, the coolant temperature is controlled in accordance with the change in coolant pressure. By regulating the opening degree of pressure regulating valve 39, the pressure of the coolant flowing through cooling unit 30 is increased or decreased, and thus, the coolant temperature is controlled in accordance with the change in coolant pressure. By regulating the opening degree of pressure regulating valve 49, the pressure of the coolant flowing through cooling unit 40 is increased or decreased, and thus, the coolant temperature is controlled in accordance with the change in coolant pressure.

By optimally controlling the opening degrees of pressure regulating valves 19, 39 and 49, the temperature of the coolant flowing through each of the coolant routes provided in parallel can be optimally controlled. Accordingly, it becomes possible to provide a coolant in the optimal state to each of heat exchanger 18 and cooling units 30 and 40 in accordance with the change in the coolant cooling state in heat exchanger 14, the change in the required amount of the cooling operation for cooling air-conditioning air in heat exchanger 18, the change in the amount of generated heat from HV devices 31, 33, 41, and 43, or the like. Therefore, the ability to cool HV devices 31, 33, 41, and 43 can be further equalized, and the constancy of the ability of the coolant to cool the heat source can be improved.

By controlling the state of the coolant such as a temperature of the coolant flowing through heat exchanger 18 and cooling units 30 and 40, the cooling ability and the cooling efficiency of heat exchanger 18 and cooling units 30 and 40 can be significantly improved. Accordingly, inexpensive cooling device 1 can be provided while easing heat specifications of HV devices 31, 33, 41, and 43.

### (Second Embodiment)

Fig. 6 is a schematic diagram showing the configuration of a cooling device 1 according to the second embodiment. Cooling device 1 of the second embodiment is different from cooling device 1 of the first embodiment shown in Fig. 1 in that expansion valve 16 performing throttle expansion for the coolant condensed in heat exchanger 14 includes three control valves 17, 37 and 47, and accumulator 60 is not provided. Control valves 17, 37 and 47 are provided on the downstream of the branch point at which the route of the liquid coolant flowing out of receiver 62 branches into three routes. Control valve 17 is provided in coolant passage 24 on the inlet side of heat exchanger 18. Control valve 37 is provided in coolant passage 34 on the inlet side of cooling unit 30. Control valve 47 is provided in coolant passage 44 on the inlet side of cooling unit 40.

Coolant passage 25 is provided with a superheat-degree detection unit 57 detecting the degree of superheat of the coolant flowing out of heat exchanger 18 and flowing through coolant passage 25. Control valve 17 is controlled in opening degree based on the degree of superheat of the coolant detected by superheat-degree detection unit 57. Specifically, the opening degree of control valve 17 is increased when the degree of superheat of the coolant flowing through coolant passage 25 is higher than a target value; and the opening degree of control valve 17 is decreased when the degree of superheat of the coolant flowing through coolant passage 25 is lower than the target value. Control valve 17 has a function as the first flow rate control valve regulating the flow rate of the coolant flowing into heat exchanger 18.

Coolant passage 35 is provided with a superheat-degree detection unit 58 detecting the degree of superheat of the coolant flowing out of cooling unit 30 and flowing through coolant passage 35. Control valve 37 is controlled in opening degree based on the degree of superheat of the coolant detected by superheat-degree detection unit 58. Specifically, the opening degree of control valve 37 is increased when the degree of superheat of the coolant flowing through coolant passage 35 is higher than a target value; and the opening degree of control valve 37 is decreased when the degree of superheat of the coolant flowing through coolant passage 35 is lower than the target value. Control valve 37 has a function as the second flow rate control valve regulating the flow rate of the coolant flowing into cooling unit 30.

Coolant passage 45 is provided with a superheat-degree detection unit 59 detecting the degree of superheat of the coolant flowing out of cooling unit 40 and flowing through coolant passage 45. Control valve 47 is controlled in opening degree based on the degree of superheat of the coolant detected by superheat-degree detection unit 59. Specifically, the opening degree of control valve 47 is increased when the degree of superheat of the coolant flowing through coolant passage 45 is higher than a target value; and the opening degree of control valve 47 is decreased when the degree of superheat of the coolant flowing through coolant passage 45 is lower than the target value. Control valve 47 has a function as the second flow rate control valve regulating the flow rate of the coolant flowing into cooling unit 40.

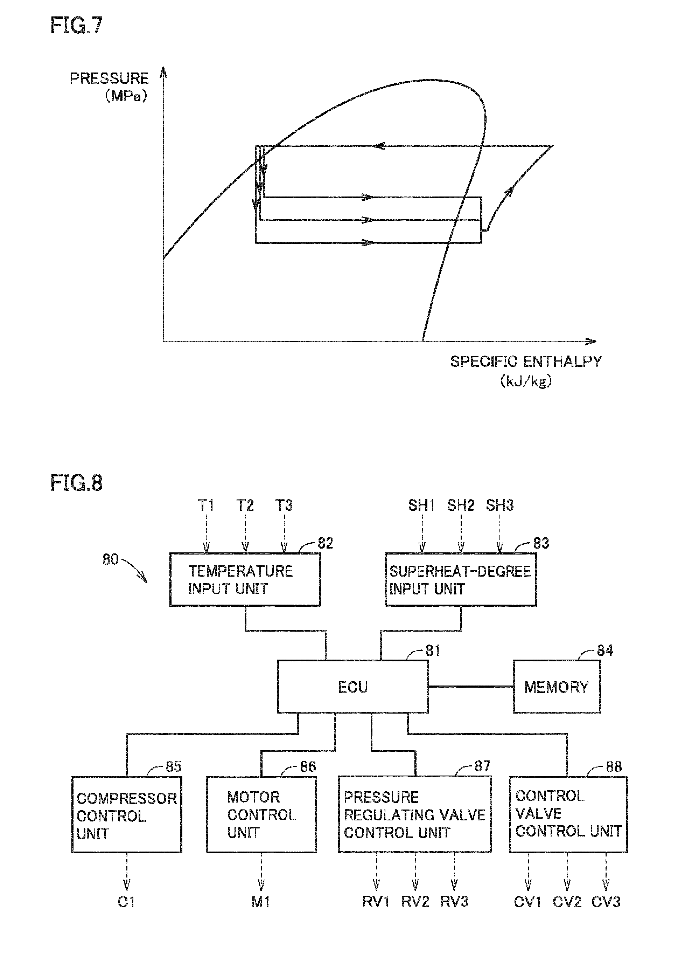

Fig. 7 is a Mollier chart showing the state of a coolant in a vapor compression refrigeration cycle 10 according to the second embodiment. In Fig. 7, the horizontal axis denotes a specific enthalpy of the coolant while the vertical axis denotes an absolute pressure of the coolant. The unit of the specific enthalpy is kJ/kg and the unit of the absolute pressure is MPa. The curve shown in the figure is a saturated vapor line and a saturated liquid line of the coolant.

As shown in Fig. 7, the coolant in a supercooled-liquid state condensed in heat exchanger 14 undergoes throttle expansion so as to reach a prescribed pressure by each of control valves 17, 37 and 47. The pressure and the temperature of the coolant are regulated by control valves 17, 37, and 47 so as to achieve the pressure and the temperature suitable to cooling of air-conditioning air in heat exchanger 18, cooling of HV devices 31 and 33 in cooling unit 30, and cooling of HV devices 41 and 43 in cooling unit 40, respectively.

Control valve 17 serves to decompress the coolant such that the coolant having the cooling ability required in heat exchanger 18 can be supplied to heat exchanger 18. Control valve 37 serves to decompress the coolant such that the coolant having the cooling ability required for cooling HV devices 31 and 33 can be supplied to cooling unit 30. Control valve 47 serves to decompress the coolant such that the coolant having the cooling ability required for cooling HV devices 41 and 43 can be supplied to cooling unit 40.

Fig. 8 is a block diagram showing details of the configuration of a control unit 80 according to the second embodiment. In addition to the configuration of control unit 80 of the first embodiment shown in Fig. 3, control unit 80 of the second embodiment includes a superheat-degree input unit 83 receiving a signal indicating the degree of superheat of the coolant, and a control valve control unit 88 controlling the opening degrees of control valves 17, 37 and 47. Control unit 80 of the second embodiment also includes a pressure regulating valve control unit 87 controlling pressure regulating valves 19, 39 and 49, in place of expansion valve and pressure regulating valve control unit 87 of the first embodiment.

Superheat-degree input unit 83 receives a signal SH1 indicating the degree of superheat of the coolant flowing through coolant passage 25 that has been detected by superheat-degree detection unit 57, a signal SH2 indicating the degree of superheat of the coolant flowing through coolant passage 35 that has been detected by superheat-degree detection unit 58, and a signal SH3 indicating the degree of superheat of the coolant flowing through coolant passage 45 that has been detected by superheat-degree detection unit 59.

Control valve control unit 88 receives a control instruction transmitted from ECU 81, transmits a signal CV1 to control valve 17 that gives an instruction for the opening degree of control valve 17, transmits a signal CV2 to control valve 37 that gives an instruction for the opening degree of control valve 37, and transmits a signal CV3 to control valve 47 that gives an instruction for the opening degree of control valve 47. Control valves 17, 37 and 47 are electric valves and changed in opening degree in accordance with signals CV1, CV2 and CV3, respectively, transmitted from control unit 80.

ECU 81 compares each degree of superheat input into superheat-degree input unit 83 with the target value of the degree of superheat of the coolant stored in memory 84. In accordance with this comparison result, ECU 81 controls the opening degrees of control valves 17, 37 and 47. ECU 81 has a function as a control valve opening degree regulation unit regulating the opening degrees of control valves 17, 37 and 47.

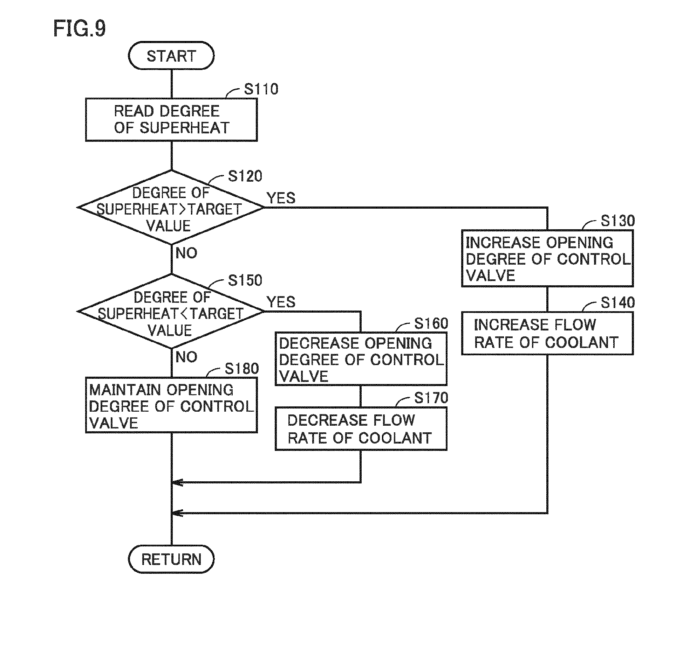

Fig. 9 is a flowchart illustrating an example of a method of controlling cooling device 1 according to the second embodiment. Fig. 9 shows an example of the control flow at the time when the degrees of superheat of the coolant flowing out of heat exchanger 18 and cooling units 30 and 40 are optimally controlled by regulating the opening degrees of control valves 17, 37 and 47, respectively, of cooling device 1. Although the following description will provide an explanation of an example in which the opening degree of control valve 37 is changed for controlling the degree of superheat of the coolant flowing out of cooling unit 30, other control valves 17 and 47 are also controlled in the same manner as in the example described below.

As shown in Fig. 9, the degree of superheat of the coolant flowing through the outlet of cooling unit 30 is first read in step (S110). Specifically, superheat-degree detection unit 58 is used to detect the degree of superheat of the coolant flowing through coolant passage 35 on the outlet side of cooling unit 30, which has undergone heat exchange with HV devices 31 and 33 in cooling unit 30. Signal SH2 indicating the temperature detected by superheat-degree detection unit 58 is transmitted from superheat-degree detection unit 58 to superheat-degree input unit 83, and input into ECU 81, thereby reading the degree of superheat of the coolant.

It is then determined in step (S120) whether the degree of superheat of the coolant at the outlet of cooling unit 30 exceeds a target value of the degree of superheat or not. When it is determined in step (S120) that the degree of superheat of the coolant exceeds the target value, the opening degree of control valve 37 is then increased in step (S130). In accordance with this regulation of the opening degree of control valve 37, the flow rate of the coolant increases in step (S140). The target value of the degree of superheat can be set, for example, such that the temperature difference between the superheated vapor and the saturated vapor under the same pressure falls within a range of 3 °C to 5 °C. As to the target value of the degree of superheat, a certain specific degree of superheat may be set as a target value, or a specific range of the degree of superheat having upper and lower limit values may be set as a target value.

The reason why the degree of superheat of the coolant is high is that the coolant was excessively heated in cooling unit 30, for example, due to a relatively large amount of generated heat from HV devices 31 and 33, and the like. In this case, it is considered that HV devices 31 and 33 are not sufficiently cooled. Therefore, the opening degree of control valve 37 is increased to increase the flow rate of the coolant flowing through cooling unit 30, thereby improving the cooling ability for HV devices 31 and 33 in cooling unit 30, so that HV devices 31 and 33 can be appropriately cooled and overheating of HV devices 31 and 33 can be avoided.

When it is determined in step (S120) that the degree of superheat of the coolant is equal to or lower than the target value, it is then determined in step (S150) whether the degree of superheat of the coolant at the outlet of cooling unit 30 is lower than the target value or not. When it is determined in step (S150) that the degree of superheat of the coolant is lower than the target value, the opening degree of control valve 37 is decreased in step (S160). In accordance with this regulation of the opening degree of control valve 37, the flow rate of the coolant decreases in step (S170).

The reason why the degree of superheat of the coolant is low is that the coolant is excessively supplied to cooling unit 30, for example, due to a relatively small amount of generated heat from HV devices 31 and 33, and the like. In this case, it is considered that HV devices 31 and 33 are excessively cooled. Therefore, the opening degree of control valve 37 is decreased to decrease the flow rate of the coolant flowing through cooling unit 30, thereby lowering the cooling ability for HV devices 31 and 33 in cooling unit 30, so that HV devices 31 and 33 can be appropriately cooled.

When it is determined in step (S150) that the degree of superheat of the coolant is equal to or higher than the target value, that is, when it is determined that the degree of superheat of the coolant at the outlet of cooling unit 30 is equal to the target value, the opening degree of control valve 37 is maintained in step (S180). After steps (S140), (S170) or (S180) shown in Fig. 9, the control flow is returned to step (S110) in which the degree of superheat is read again.

According to cooling device 1 of the second embodiment described above, control valve 17 is provided on the upstream side of heat exchanger 18, control valve 37 is provided on the upstream side of cooling unit 30, and control valve 47 is provided on the upstream side of cooling unit 40. Then, by regulating the opening degrees of control valves 17, 37 and 47, the degrees of superheat of the coolant having passed through heat exchanger 18 and cooling units 30 and 40, respectively, can be controlled. By regulating the opening degree of control valve 17, the flow rate of the coolant flowing through heat exchanger 18 is increased or decreased, thereby controlling the ability of the coolant to cool air-conditioning air in accordance with the flow rate of the coolant. By regulating the opening degree of control valve 37, the flow rate of the coolant flowing through cooling unit 30 is increased or decreased, thereby controlling the ability of the coolant to cool HV devices 31 and 33 in accordance with the flow rate of the coolant. By regulating the opening degree of control valve 47, the flow rate of the coolant flowing through cooling unit 40 is increased or decreased, thereby controlling the ability of the coolant to cool HV devices 41 and 43 in accordance with the flow rate of the coolant.

By optimally controlling the opening degrees of control valves 17, 37 and 47, the degree of superheat of the coolant flowing through each of the coolant routes provided in parallel can be optimally controlled. Accordingly, it becomes possible to provide an optimum amount of coolant to each of heat exchanger 18 and cooling units 30 and 40 in accordance with the change in the coolant cooling state in heat exchanger 14, the change in the required amount of the cooling operation for cooling air-conditioning air in heat exchanger 18, the change in the amount of generated heat from HV devices 31, 33, 41, and 43, or the like. For example, when the amount of generated heat from HV devices 41 and 43 is relatively small while the amount of generated heat from HV devices 31 and 33 is relatively large, the opening degrees of control valves 37 and 47 only have to be regulated so as to decrease the flow rate of the coolant supplied to cooling unit 40 and to increase the flow rate of the coolant supplied to cooling unit 30.

When the minimum necessary coolant is caused to flow into each system, the liquid coolant can be suppressed from accumulating in heat exchanger 18 and cooling units 30 and 40, so that distribution of the coolant to a plurality of coolant routes provided in parallel can be optimized. By regulating the coolant flow rate such that all of the coolant evaporates in heat exchanger 18 and cooling units 30 and 40, it becomes possible to reliably prevent the coolant in a liquid state from flowing into compressor 12 to cause a failure in compressor 12. All of the coolant can be controlled to be in a superheated vapor state while the liquid-phase coolant does not remain at the outlets of heat exchanger 18 and cooling units 30 and 40. Accordingly, accumulator 60 for performing gas-liquid separation between the gas-phase coolant and the liquid-phase coolant can be omitted, so that cooling device 1 can be reduced in cost.

The embodiments set forth above have provided an example in which temperature detection units 52, 53 and 54 are provided so as to detect the temperature of the coolant on the outlet side of each of heat exchanger 18, cooling unit 30 and cooling unit 40, respectively. The positions of temperature detection units 52, 53 and 54 are however not limited to this example, but temperature detection units 52, 53 and 54 may be disposed so as to measure the temperature of the coolant at an optional position as long as the temperature of the coolant between expansion valve 16 and each of pressure regulating valves 19, 39 and 49 can be detected. For example, temperature detection unit 52 may detect the temperature of the coolant flowing through heat exchanger 18, temperature detection unit 53 may detect the temperature of the coolant flowing through cooling passage 32 between HV device 31 and HV device 33, and temperature detection unit 54 may detect the temperature of the coolant flowing through coolant passage 44 on the inlet side of cooling unit 40.

Furthermore, although cooling units 30 and 40 include, as heat sources, two HV devices 31 and 33 and two HV devices 41 and 43, respectively, each cooling unit may include one heat source or any number of heat sources. Furthermore, without being limited to the configuration in which two cooling units 30 and 40 are connected in parallel, one cooling unit may be connected in parallel with heat exchanger 18, or three or more cooling units may be connected in parallel with heat exchanger 18.

In the above-described embodiments, explanations have been given with regard to cooling device 1 cooling electric devices mounted in a vehicle by referring to HV devices 31, 33, 41, and 43 as examples. The electric devices may be any electric devices as long as they are at least operated to generate heat, but are not limited to exemplified electric devices such as an inverter and a motor generator. In the case where a plurality of electric devices need to be cooled, it is desirable that these plurality of electric devices have a common targeted temperature range for cooling. The targeted temperature range for cooling is an appropriate temperature range as a temperature environment where electric devices are operated.

Furthermore, the heat source cooled by cooling device 1 of the present invention is not limited to electric devices mounted in a vehicle, but may be any device generating heat, or a part of any device generating heat.

Although the embodiments of the present invention have been described as above, it should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### INDUSTRIAL APPLICABILITY

The cooling device of the present invention may be particularly advantageously applied to cooling of an electric device by using a vapor compression refrigeration cycle for cooling a vehicle cabin in a vehicle such as an electric vehicle equipped with electric devices such as a motor generator and an inverter.

### REFERENCE SIGNS LIST

1 cooling device, 10 vapor compression refrigeration cycle, 12 compressor, 14, 18 heat exchanger, 16 expansion valve, 17, 37, 47 control valve, 19, 39, 49 pressure regulating valve, 21, 22, 23, 24, 25, 26, 27, 34, 35, 36, 44, 45, 46 coolant passage, 30, 40 cooling unit, 31, 33, 41, 43 HV device, 32, 42 cooling passage, 52, 53, 54 temperature detection unit, 57, 58, 59 superheat-degree detection unit, 60 accumulator, 62 receiver, 80 control unit. 82 temperature input unit, 83 superheat-degree input unit, 87 expansion valve and pressure regulating valve control unit, 88 control valve control unit.

## Claims

1. A cooling device (1) cooling a heat source (31), said cooling device (1) comprising:
a compressor (12) compressing a coolant;
a first heat exchanger (14) performing heat exchange between said coolant and outside air;
a decompressor (16) decompressing said coolant;
a second heat exchanger (18) performing heat exchange between said coolant and air-conditioning air;
a cooling unit (30) connected in parallel with said second heat exchanger (18) and cooling said heat source (31) using said coolant;
a first pressure regulating valve (19) disposed on a downstream side of said second heat exchanger (18) and regulating pressure of said coolant flowing through said second heat exchanger (18); and
a second pressure regulating valve (39) disposed on a downstream side of said cooling unit (30) and regulating the pressure of said coolant flowing through said cooling unit (30),
said first pressure regulating valve (19) being regulated in opening degree in accordance with a temperature of said coolant between said decompressor (16) and said first pressure regulating valve (19), and
said second pressure regulating valve (39) being regulated in opening degree in accordance with the temperature of said coolant between said decompressor (16) and said second pressure regulating valve (39).

2. The cooling device (1) according to claim 1, wherein
said first pressure regulating valve (19) is increased in valve opening degree when the temperature of said coolant between said decompressor (16) and said first pressure regulating valve (19) is higher than a set value, and decreased in valve opening degree when the temperature of said coolant between said decompressor (16) and said first pressure regulating valve (19) is lower than the set value, and
said second pressure regulating valve (39) is increased in valve opening degree when the temperature of said coolant between said decompressor (16) and said second pressure regulating valve (39) is higher than a set value, and decreased in valve opening degree when the temperature of said coolant between said decompressor (16) and said second pressure regulating valve (39) is lower than the set value.

3. The cooling device (1) according to claim 1 or 2, comprising a gas-liquid separator (60) separating the coolant to be sucked into said compressor (12) into gas and liquid.

4. The cooling device (1) according to claim 1 or 2, wherein said decompressor (16) includes a first flow rate control valve (17) regulating a flow rate of said coolant flowing into said second heat exchanger (18), and a second flow rate control valve (37) regulating the flow rate of said coolant flowing into said cooling unit (30).

5. The cooling device (1) according to claim 4, wherein
said first flow rate control valve (17) is regulated in opening degree in accordance with a degree of superheat of said coolant on an outlet side of said second heat exchanger (18), and
said second flow rate control valve (37) is regulated in opening degree in accordance with the degree of superheat of said coolant on an outlet side of said cooling unit (30).

6. The cooling device (1) according to claim 5, wherein
said first flow rate control valve (17) is increased in valve opening degree when the degree of superheat of said coolant on the outlet side of said second heat exchanger (18) is higher than a set value, and decreased in valve opening degree when the degree of superheat of said coolant on the outlet side of said second heat exchanger (18) is lower than the set value, and
said second flow rate control valve (37) is increased in valve opening degree when the degree of superheat of said coolant on the outlet side of said cooling unit (30) is higher than a set value, and decreased in valve opening degree when the degree of superheat of said coolant on the outlet side of said cooling unit (30) is lower than the set value.
